(19) Europäisches Patentamt
European Patent Office
Office européen des brevets

(11) Publication number: 0 256 942 A2

# (12) EUROPEAN PATENT APPLICATION

(21) Application number: 87401850.0

(22) Date of filing: 07.08.87

(51) Int. Cl.4: A 01 N 57/20
//(A01N57/20,43:50)

(30) Priority: 08.08.86 JP 185065/86

(43) Date of publication of application:
24.02.88 Bulletin 88/08

(84) Designated Contracting States: DE FR GB IT

(71) Applicant: MEIJI SEIKA KAISHA LTD.
4-16 Kyobashi 2-chome
Chuo-ku Tokyo 104 (JP)

(72) Inventor: Tachibana, Kunitaka
3-22-23 Kugahara Ohta-ku
Tokyo (JP)

Kaneko, Kunio
618-1, Ohmaki
Urawa-shi Saitama-ken (JP)

Watanabe, Tetsuro
2-390-3, Matsumi-cho Kanagawa-ku
Yokohama-shi Kanagawa-ken (JP)

(74) Representative: Nony, Michel et al
Cabinet NONY & CIE 29, rue Cambacérès
F-75008 Paris (FR)

## (54) A herbicidal composition.

(57) A new herebicidal composition is now provided, which comprises (i) at least one of 2-amino-4-[(hydroxy)(methyl) phosphinoyl]butyryl-alanylalanine (namely, SF-1293 substance), a salt thereof, 2-amino-4-[(hydroxy)(methyl) phosphinoyl]butyric acid and a salt thereof as the active component (a); and (ii) at least one of 2-(4-isopropyl-4-methyl-5-oxo-2-imidazoline-2-yl)-nicotinic acid (namely, "Arsenal") and a salt thereof as the active component (b) in combination, and which shows a synergism in the herbicidal activities exhibited.

EP 0 256 942 A2

**Description**

## A HERBICIDAL COMPOSITION

SUMMARY OF THE INVENTION:

This invention relates to a herbicidal composition which can severely damage or kill the overground segments of the weeds or bushes and strongly inhibit the regrowth of the plants when applied to annual and perennial weeds as well as various bushes.

BACKGROUND OF THE INVENTION:

In Japanese patent publication No. 639/76 and U.S. patent No. 3,832,394, there is disclosed SF-1293 substance identifiable as 2-amino-4-[(hydroxy)(methyl)phosphinoyl] butyryl-alanylalanine which is useful as antifungal agent. Also, a compound identified as 2-amino-4-[(hydroxy)(methyl) phoshinoyl]butyric acid is disclosed in the "Helvetica Chimica Acta" Vol. 55, Fasc. 1, p. 224-239 (1972) as antifungal agent.

We, the present inventors, have made study of the biological activities and utilities of 2-amino-4-[(hydroxy) (methyl)phosphinoyl]butyryl-alanylalanine (named "SF-1293") and the salts thereof (hereinafter collectively referred to as "SF-1293 substances"). As a result, we have found that the SF-1293 substances exhibit remarkable excellent herbicidal effects.

Thus, it has been found that the SF-1293 substances are herbicidally active to growing annual and perennial weeds as well as various bushes, and that upon the foliage treatment, they can damage or kill the overground segments of these kinds of plants and inhibit regrowth of the plants. Thus, an invention relating to the herbicidal compositions containing as the active ingredient at least one of the SF-1293 substances has been accomplished (see Japanese patent publication No. 23282/84 and U.S. patent No. 4,309,208).

It has further been found that 2-amino-4-[(hydroxy) (methyl)phosphinoyl]butyric acid (abbreviated as "AMPB") and the salts thereof (hereinafter collectively referred to as "AMPB substances") can strongly damage and kill the weeds and bushes treated, upon the foliage treatment (see Japanese patent publication No. 26564/82; U.S. patent No. 4,168,963 and U.S. patent No. 4,265,654).

We, the present inventors, have made further researches to utilize more effectively the inherent characteristics of the SF-1293 substances, and as a result, we have discovered that the herbicidal effects of the SF-1293 substances can be appreciably enhanced when they are applied in combination with one or more particular compounds selected from some translocated or systemic herbicides, some compounds having phyto-hormonic activity, some nitrogen-containing compounds and others (see Japanese patent application first publication "Kokai" Nos. 119034/79; 92627/79; 92628/79; 95903/82; 149210/82 and 18311/83). While, 2-(4-isopropyl-4-methyl-5-oxo-2-imadazolin-2-yl)-nicotinic acid (named "Arsenal") and the salts thereof (hereinafter collectively referred to as "Arsenal substances") are herbicidally active to germinating and growing annual and perennial weeds as well as various bushes, when applied upon the foliage of these plants or in the soil where they grow. Particularly, upon the foliage treatment, they show the characteristics that they can effectively damage or kill the overground segments of the weeds and bushes and exhibit a strong inhibition against the regrowth of the plants.

Based on the findings mentioned above, we, the present inventors, have made further researches to utilize more effectively the SF-1293 substances or the AMPB substances in combination with other herbicidal compounds, and as a result we have discovered surprisingly that a mixture of one or more compounds selected from the SF-1293 substances and the AMPB substances with one or more compounds selected from the Arsenal substances exhibits a remarkable improved and enhanced herbicidal activity, as compared with these compounds as each applied alone. The present invention has thus now been made.

The purpose of this invention is therefore to provide a novel herbicidal composition which exhibits an enhanced herbicidal activity.

DETAILED DESCRIPTION OF THE INVENTION:

According to this invention, therefore, there is provided a herbicidal composition characterized in that the composition comprises a mixture of:-

(i) the component (A) which is at least one of the compounds represented by the formula (I) :

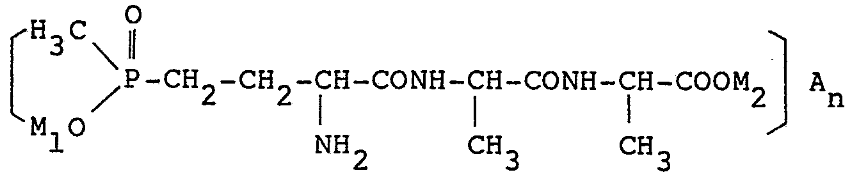

(I)

and the compounds represented by the formula (II) :

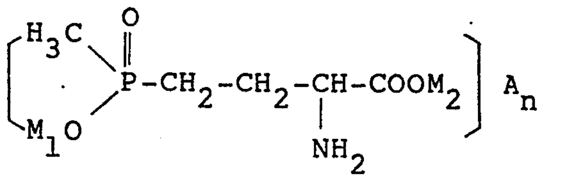

(II)

wherein $M_1$ and $M_2$ are the same or different and are each a hydrogen atom, cation of an alkaline metal such as sodium, potassium and lithium; cation of an alkaline earth metal such as magnesium and calcium; zinc cation, nickel cation, manganese cation, ammonium cation, a substituted ammonium cation which is substituted by one, two or three lower alkyl groups, a substituted ammonium cation which is substituted by one, two or three hydroxyalkyl groups, a substituted ammonium cation which is substituted by one, two or three lower alkylene groups, or a choline cation; A is an inorganic acid or an organic acid; and n is 0, $^1/_2$ or 1, namely, the compounds of 2-amino-4-[(hydroxy) (methyl)phosphinoyl]butyryl-alanylalanine (namely, "SF-1293"), L-2-amino-4-[(hydroxy)(methyl)phosphinoyl]- butyric acid (namely, "L-AMPB") and DL-2-amino-4-[(hydroxy) (methyl)phosphinoyl]butyric acid (namely, "DL-AMPB") and the salts thereof; and

(ii) the component (B) which is at least one of the compounds represented by the formula (III):

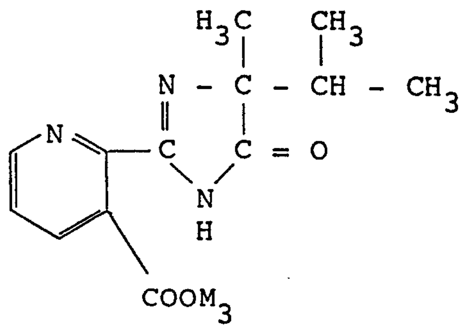

(III)

wherein $M_3$ is a hydrogen atom, an alkaline metal cation, an alkaline earth metal cation, copper cation, zinc cation, nickel cation, manganese cation, ammonium cation, a substituted ammonium cation which is substituted by one, two or three lower alkyl groups, a substituted ammonium cation which is substituted by one, two or three hydroxyalkyl groups, a substituted ammonium cation which is substituted by one, two or three lower alkylene groups, or a choline cation; and the salts thereof; that is, 2-(4-isopropyl-4-methyl-5-oxo-2-imidazolin-2-yl)-nicotinic acid and the salt thereof, preferably a salt thereof with an alkylamine such as isopropylamine.

Metals ($M_1$) and ($M_2$) present in the compounds of the formulae (I) and (II) as the component (A) as well as metal ($M_3$) present in the compounds of the formula (III) as the component (B) according to this invention may usually be an alkaline metal such as sodium, potassium and lithium, or an alkaline earth metal such as magnesium and calcium, respectively. The lower alkyl substituent in the ammonium cation, which is substituted by a lower alkyl group or groups may be an alkyl group of 1-4 carbon atoms such as methyl, ethyl, n-propyl, isopropyl, n-butyl and isobutyl. The lower alkylene substituent in the ammonium cation which is substituted by a lower alkylene group or groups may be an alkylene group of 1-4 carbon atoms such as methylene, ethylene, n-propylene, isopropylene, n-butylene and isobutylene. The inorganic acids and organic acids (A) present in the compounds of the formula (I) and (II) may respectively be an inorganic acid such as hydrochloric acid, sulfuric acid, hydrobromic acid, phosphoric acid, perchloric acid and nitric acid; and an organic acid such as acetic acid, propionic acid, citric acid, tartaric acid, monochloroacetic acid, trichloroacetic acid and/or trifluoroacetic acid.

The compound (I) or (II) used as the component (A) of the herbicidal compositions according to this invention exhibits itself a strong herbicidal activity against the weeds upon the foliage application and achieves earlier development of the herbicidal effects, though these compounds (I) and (II) by themselves sometimes cannot bring about a sufficient suppression of the regrowth of the weeds, particularly against the perennial weeds which have a strong regrowing ability. Further, the compound (III) used as the component (B) of the herbicidal compositions according to this invention exhibits itself a strong suppression of the regrowth of various weeds such as perennial weeds, though the compound (III) by itself cannot achieve earlier development of the herbicidal effect, so that the compound (III) requires a period of 3 weeks to 1 month for effecting the complete kill of the weeds. When the compound (I) or (II) as the component (A) mentioned above is applied to the foliages of the weeds, in combination with the compound (III) as the component (B) mentioned above, the development of the herbicidal effect can be as fast as or can be promoted earlier than when the single application of the compound (I) or (II) for the component (A) is made, and the combined application of the compound (I) or (II) as the component (A) with the compound (III) as the component (B)

results in improved herbicidal effects, while maintaining the strong activity of suppression against the regrowth of perennial weeds which is inherent to the component (B) compound. It is indeed unexpectedly found that the combined application of the component (A) compound with the component (B) compound can exhibit such a synergistically enhanced strong herbicidal activity, as compared to the single application of the component (A) compound or of the component (B) compound.

The synergism from the combined application of the compound (I) or (II) as the component (A) with the compound (III) as the component (B) can be proved evidently by the following biological experiments.

The synergistic effect of the herbicidal compositions of this invention was demonstrated and evaluated according to the following two test procedures:

(i) Comparison of the herbicidal effect obtained upon the combined application of the component (A) and the component (B), with the herbicidal effect obtained upon the single application of the component (A) or of the component (B) applied alone each at the same rate of application as that of the mixture of the components (A) + (B) applied in combination (Test Examples 1 and 2).

(ii) Evaluation according to Colby's equation of calculation as described in the article "Calculation of Synergistic and Antagonistic Responses of Herbicide Combination; the "Weeds", 15 (1967), pages 20-22" (Test Examples 3 to 7).

According to Colby, the "expected" value for the herbicidal effect of the combined application of two herbicides may be calculated by the equation:

$$E = X + Y - \frac{X \cdot Y}{100}$$

where X is Kill Rate of the herbicide (A) applied alone at a rate of p Kg per hectare, Y is Kill Rate of the herbicide (B) applied alone in a rate of q Kg per hectare, and E is the "expected" Kill Rate of the combined application of the herbicide (A) at a rate of p Kg per hectare and the herbicide (B) at a rate of q Kg per hectare.

When the "actual" kill rate as observed with the combination of the component (A) and the component (B) exceeds the "expected" value (E), it shows that the combination brings about an effect greater than the additive effect, namely, the combination has a synergism.

As is clear from the Test Examples 1 to 5 conducted according to the two procedures of test mentioned above, the herbicidal compositions consisting of a mixture of the SF-1293 substances, the L-AMPB substances or the DL-AMPB substances with the Arsenal substances can exhibit a synergistically enhanced herbicidal activity against a wide variety of annual or perennial, monocotyledonous and dicotyledonous weeds.

The herbicidal composition of this invention can be applied for various herbicidal purposes in agricultural areas such as crop areas, orchards and mulberry fields; for land arrangement by controlling weeds and bushes in forestry lands; as well as for prevention of weeds and bushes in grasslands. The herbicidal composition of this invention can also be applied in non-crop lands such as factory sites (areas), railway sites, parks, public facilities, river beds, banks, highways, golf links and fallow fields. The herbicidal compositions can also be applied in aquatic areas to control aquatic weeds and algae.

The ratio by weight of the component (A) to the component (B) to be incorporated in the herbicidal composition according to this invention may usually be in a range of 1:0.5 to 1:10, preferably 1:1 to 1:5. The amount of the component (A) applied may usually be in a range of 0.125 to 2.0 Kg per hectare and may preferably be in a range of 0.25 to 1.0 Kg per hectare. The amount of the component (B) applied may usually be in a range of 0.125 to 2.5 Kg per hectare and may preferably be in a range of 0.25 to 2.0 Kg per hectare. A quantity of the herbicidal composition of this invention, for example, in the form of an aqueous solution containing the active components at the rate of application mentioned above may usually be applied by spraying said solution at a rate of 0.1 to 2.5 Kℓ per hectare, and may preferably be applied by spraying the solution at a rate of 0.2 to 1.5 Kℓ per hectare. The ratio of the component (A) to the component (B) in the herbicidal composition according to this invention may properly vary within a range mentioned above, depending upon the nature of the component compounds (A) and (B) and other factors. The herbicidal composition of this invention can be formulated into any conventional forms by mixing with any known liquid or solid diluent or carrier.

For the practical use, the composition may be formulated in any conventional manner using any known diluent and may usually be applied as any conventional forms such as aqueous solution, liquid, wettable powder, emulsion, dusting powder and fine granules. Upon the preparation of the herbicidal composition in such a formulation as above, one or more surface-active agents such as non-ionic surface-active agents, cationic surface -active agents and anionic surface-active agents may be incorporated therein to secure and improve the herbicidal effects.

The herbicidal composition of this invention is now further illustrated by but not limited to the following Examples and Test Examples. In the following Examples, values of (%) are by weight, unless otherwise stated.

Example 1 Liquid formulation

| | |
|---|---|
| SF-1293 mono-sodium salt ((A) component) | 10.0% |
| Arsenal isopropylamine salt ((B) component) | 20.0% |
| Octylphenylpolyoxyethanol | 15.0% |
| Methyl para-hydroxybenzoate | 0.15% |
| Water | 54.85% |

The ingredients above were mixed together into solution to prepare a composition in the form of solution, which was dilutable with water for use in the foliage treatment.

Example 2 Wettable powder

| | |
|---|---|
| L-AMPB mono(diethanol)-ammonium salt [component (A)] | 10.0% |
| Arcenal sodium salt [component (B)] | 30.0% |
| Kieselguhr | 50.0% |
| Polyoxyethylene dodecyl ether | 10.0% |

The ingredients above were mixed together uniformly and ground finely to prepare a wettable powder, which was dilutable with water and for use in the foliage treatment.

Example 3 Aqueous solution

| | |
|---|---|
| SF-1293 mono-potassium salt [(A) component] | 10.0% |
| Arsenal isopropylamine salt [(B) component] | 40.0% |
| Dodecyl benzenesulfonate | 15.0% |
| Urea | 35.0% |

The ingredients above were mixed together and ground finely to prepare a wettable powder, which was dilutable in water and for use in the foliage treatment.

The following tests illustrate the herbicidal activity (synergism) of the herbicidal composition according to this invention.

Test Example 1

Crabgrass (Digitaria adscendens) was sown in experimental farm fields. After germinatation, the seedlings grown were thinned to a density of about 200 plants/$m^2$. When the seedlings of crabgrass grew to a height of 15 cm., an aqueous solution containing predetermined amounts of SF-1293 mono-sodium salt and Arsenal isopropylamine salt was applied by spraying over the whole foliages of crabgrass at a rate of 1 kℓ per hectare. Polyoxyethylene lauryl ether as a spreading agent had been added to the spraying solution to the concentration of said agent of 0.2% in the spraying solution. Damage to the weed was assessed on scales of 0% to 100% where 0% signifies no effect and 100% signifies complete kill. The test was conducted with three replications (n=3) and with each test field section of l $m^2$ area.

As be shown in Table 1 below, the combined application of the component (A) and component (B) clearly exhibited a synergism in the herbicidal activity.

Table 1

| Test compounds and rate of application of the compounds | | Kill Rate (%) at lapse of 7 to 35 days after Foliage Treatment | | | | |
|---|---|---|---|---|---|---|
| Mono-sodium salt of SF-1293 (kg/ha) | Arsenal isopropyl-amine salt (kg/ha) | 7 days after | 14 days after | 21 days after | 28 days after | 35 days after |
| 0.2 | 0.6 | 56 | 58 | 68 | 72 | 74 |
| 0.4 | 0.4 | 38 | 56 | 70 | 74 | 76 |
| 0.6 | 0.2 | 42 | 64 | 72 | 74 | 72 |
| 0 | 0.2 | 20 | 20 | 26 | 40 | 68 |
| 0 | 0.4 | 20 | 14 | 24 | 40 | 68 |
| 0 | 0.6 | 20 | 20 | 24 | 42 | 70 |
| 0 | 0.8 | 20 | 22 | 26 | 46 | 74 |
| 0.4 | 0 | 34 | 34 | 10 | 0 | 0 |
| 0.8 | 0 | 40 | 50 | 24 | 4 | 0 |
| 1.2 | 0 | 44 | 56 | 46 | 10 | 0 |
| 1.6 | 0 | 40 | 80 | 78 | 72 | 62 |
| 0 (untreated) | 0 (untreated) | 0 | 0 | 0 | 0 | 0 |

Test Example 2

Orchard grass (Dactylis glomerata) was sown in experimental farm fields. After germination, the seedlings grown were thinned to a density of about 100 plants/$m^2$. When the seedlings of orchard grass grew to a height of 20 cm, an aqueous solution containing predetermined amounts of SF-1293 mono-sodium salt and Arsenal isopropylamine salt was applied by spraying over the whole foliage of the weed at a rate of 1 kℓ per hectare. Polyoxyethylene lauryl ether as a spreading agent had been added to the spraying solution to the concentration of said agent of 0.2% in the spraying solution. Damage to the weed was assessed on scales of 0% to 100% where 0% signifies no kill and 100% signifies complete kill. The test was conducted with two replications (n = 2) and with the experimental fields each sectioned into 1 $m^2$ area. As shown in Table 2 below, the combined application of the component (A) and the component (B) exhibited the synergism in the herbicidal activity which was evident from Colby's equation of calculation.

Table 2

| Test Compound | Rate of application of the active compounds (kg/ha) | Kill Rate (%) at lapse of 14 to 28 days after Foliage Treatment | | | | | |
|---|---|---|---|---|---|---|---|
| | | 14 days after | | | 28 days after | | |
| | | A | B | C | A | B | C |
| Arsenal isopropylamine salt + SF-1293 mono-sodium salt | 0.125 + 0.125 | 42 | 21 | ◎ | 54 | 33 | ◎ |
| | 0.125 + 0.25 | 54 | 30 | ◎ | 62 | 41 | ◎ |
| | 0.125 + 0.5 | 74 | 70 | ○ | 80 | 78 | ○ |
| | 0.125 + 1.0 | 80 | 81 | | 94 | 92 | ○ |
| | 0.25 + 0.125 | 40 | 21 | ◎ | 58 | 36 | ◎ |
| | 0.25 + 0.25 | 58 | 30 | ◎ | 70 | 44 | ◎ |
| | 0.25 + 0.5 | 70 | 70 | | 76 | 79 | |
| | 0.25 + 1.0 | 78 | 81 | | 88 | 92 | |
| | 0.5 + 0.125 | 52 | 21 | ◎ | 62 | 42 | ◎ |
| | 0.5 + 0.25 | 60 | 30 | ◎ | 70 | 50 | ◎ |
| | 0.5 + 0.5 | 76 | 70 | ○ | 84 | 81 | ○ |
| | 0.5 + 1.0 | 84 | 81 | ○ | 96 | 93 | ○ |
| | 1.0 + 0.125 | 54 | 21 | ◎ | 62 | 60 | ○ |
| | 1.0 + 0.25 | 68 | 30 | ◎ | 74 | 65 | ○ |
| | 1.0 + 0.5 | 78 | 70 | ○ | 86 | 87 | |
| | 1.0 + 1.0 | 80 | 81 | | 90 | 95 | |
| Arsenal isopropylamine salt | 0.125 | 6 | | | 16 | | |
| | 0.25 | 6 | | | 20 | | |
| | 0.5 | 6 | | | 28 | | |
| | 1.0 | 6 | | | 50 | | |
| SF-1293 mono-sodium salt | 0.125 | 16 | | | 20 | | |
| | 0.25 | 26 | | | 30 | | |
| | 0.5 | 68 | | | 74 | | |
| | 1.0 | 80 | | | 90 | | |
| Untreated | | 0 | | | 0 | | |

Note:
- A: denotes actually found value of kill rate.
- B: denotes "Expected" value of kill rate calculated by Colby's equation.
- C: denotes Judgment of synergism.
- ○: Synergistical effect observed.
- ◎: Remarkable synergistical effect with significant difference (10%) from the "expected" value.

Test Example 3

Test was carried out on a land where blady grass (Imperata cylindrica) (42 cm in height) and whiskey grass (Andropogon viruginicus) (8 cm in height) were naturally grown. An aqueous solution containing predetermined amounts of mono-sodium salt of SF-1293 and Arsenal isopropylamine salt was applied by spraying over the whole foliage of the weeds at a rate of 1 kℓ per hectare. Polyoxyethylene lauryl ether as a spreading agent had been added to the spraying solution to the concentration of said agent of 0.2% in the spraying solution. Damage to the weeds was assessed on scales of 0% to 100% where 0% signifies no kill and 100% signifies complete kill. The test was conducted with three replications (n=3) and with the experimental fields each sectioned into 4 $m^2$ area. As shown in Tables 3 (blady grass) and 4 (Whiskey grass) below, the combined application of component (A) and component (B) exhibited the synergism in the herbicidal activity which was evident from Colby's equation of calculation.

Table 3

| Test Compounds | Rate of application of the active compound (kg/ha) | Kill Rate (%) at lapse of 7 to 126 days after Foliage Treatment | | | | | | | | | | | | | | |
|---|---|---|---|---|---|---|---|---|---|---|---|---|---|---|---|---|
| | | 7 days after | | | 14 days after | | | 28 days after | | | 57 days after | | | 126 days after | | |
| | | A | B | C | A | B | C | A | B | C | A | B | C | A | B | C |
| Arsenal isopropylamine salt + SF-1293 mono-sodium salt | 1.5 + 0.25 | 37 | 22 | ⊙ | 60 | 46 | ⊙ | 75 | 59 | ⊙ | 82 | 69 | ⊙ | 99 | 98 | |
| | 1.5 + 0.375 | 43 | 29 | ⊙ | 63 | 46 | ⊙ | 77 | 64 | ⊙ | 85 | 69 | ⊙ | 99 | 98 | |
| | 1.5 + 0.5 | 53 | 32 | ⊙ | 73 | 52 | ⊙ | 80 | 63 | ⊙ | 92 | 71 | ⊙ | 99 | 98 | |
| | 2.0 + 0.25 | 43 | 20 | ⊙ | 60 | 44 | ⊙ | 70 | 62 | ○ | 77 | 73 | ○ | 99 | 99 | |
| | 2.0 + 0.375 | 50 | 27 | ⊙ | 63 | 44 | ⊙ | 70 | 66 | ○ | 77 | 73 | ○ | 98 | 99 | |
| | 2.0 + 0.5 | 43 | 30 | ⊙ | 70 | 50 | ⊙ | 78 | 65 | ⊙ | 90 | 75 | ⊙ | 99 | 99 | |
| Arsenal isopropylamine salt | 1.5 | 3 | | | 23 | | | 47 | | | 65 | | | 98 | | |
| | 2.0 | 0 | | | 20 | | | 50 | | | 70 | | | 99 | | |
| SF-1293 mono-sodium salt | 0.25 | 20 | | | 30 | | | 23* | | | 10* | | | 0* | | |
| | 0.375 | 27 | | | 30 | | | 32* | | | 10* | | | 0* | | |
| | 0.5 | 30 | | | 37 | | | 30* | | | 17* | | | 0* | | |
| Hexadinone ** (comparative) | 8.0 | 10 | | | 37 | | | 78 | | | 72 | | | | | |
| Untreated | | 0 | | | 0 | | | 0 | | | 0 | | | 0 | | |

Notes:- A, B, C and Symbols ○, ⊙ denote the same meanings as in the Table 2, respectively
*: denotes a regrowth observed
**: denotes 1-methyl-1,3,5-triazine-2,4(1H, 3H)-dione

Table 4

| Test Compounds | Rate of application of the active compound (kg/ha) | Kill Rate (%) at lapse of 7 to 126 days after Foliage Treatment | | | | | | | | | | | | | | |
|---|---|---|---|---|---|---|---|---|---|---|---|---|---|---|---|---|
| | | 7 days after | | | 14 days after | | | 28 days after | | | 57 days after | | | 126 days after | | |
| | | A | B | C | A | B | C | A | B | C | A | B | C | A | B | C |
| Arsenal isopropylamine salt + SF-1293 mono-sodium salt | 1.5 + 0.25 | 30 | 40 | | 40 | 30 | ⊙ | 65 | 45 | ⊙ | 90 | 65 | ⊙ | 93 | 87 | |
| | 1.5 + 0.375 | 33 | 16 | ⊙ | 40 | 30 | ⊙ | 67 | 56 | ⊙ | 85 | 66 | ⊙ | 78 | 87 | |
| | 1.5 + 0.5 | 37 | 23 | ⊙ | 57 | 36 | ⊙ | 67 | 60 | ○ | 92 | 67 | ⊙ | 87 | 87 | |
| | 2.0 + 0.25 | 33 | 40 | | 37 | 30 | ○ | 57 | 51 | ○ | 80 | 77 | ○ | 82 | 90 | |
| | 2.0 + 0.375 | 37 | 16 | ⊙ | 40 | 30 | ⊙ | 57 | 60 | | 82 | 78 | ○ | 80 | 90 | |
| | 2.0 + 0.5 | 30 | 23 | ⊙ | 43 | 36 | ○ | 60 | 64 | | 90 | 79 | ⊙ | 88 | 90 | |
| Arsenal isopropylamine salt | 1.5 | 0 | | | 13 | | | 30 | | | 65 | | | 87 | | |
| | 2.0 | 0 | | | 13 | | | 37 | | | 77 | | | 90 | | |
| SF-1293 mono-sodium salt | 0.25 | 40 | | | 20 | | | 22* | | | 0* | | | 0* | | |
| | 0.375 | 16 | | | 20 | | | 37* | | | 3* | | | 0* | | |
| | 0.5 | 23 | | | 27 | | | 43* | | | 7* | | | 0* | | |
| Hexadinone ** (comparative) | 8.0 | 20 | | | 72 | | | 93 | | | 94 | | | | | |
| Untreated | | 0 | | | 0 | | | 0 | | | 0 | | | 0 | | |

Notes:- A, B, C and Symbols ○ , ⊙ denote the same meanings as in the Table 2, respectively.
*: denotes a regrowth observed.
**: denotes 1-methyl-1,3,5-triazine-2,4(1H, 3H)-dione.

Test Example 4

The fields where small reed (Calamagrostis epigeios) (28 cm in height) and "Gishigishi" in Japanese name (Rumex Japonicus) (20 cm in height) were naturally grown was used for the test. An aqueous solution containing predetermined amounts of mono-sodium salt of SF-1293 and Arsenal isopropylamine salt was applied by spraying over the whole foliage of the plants or weeds at a rate of 1 kℓ per hectare. Polyoxyethylene lauryl ether as a spreading agent had been added into the spraying solution to the concentration of the spreading agent of 0.2%. Damage to the plants was assessed on scales of 0% to 100% where 0% signifies no kill and 100% signifies complete kill. The test was conducted with three replications (n=3) and with the experimental fields each sectioned into 4 $m^2$ area.

As shown in Tables 5 (small reed) and 6 (gishigishi) below, the combined application of the component (A) and the component (B) exhibited the synergism in the herbicidal activity which was evident from by Colby's equation of calculation.

Table 5

| Test Compounds | Rate of application of the active compound (kg/ha) | Kill Rate (%) at lapse of 7 to 126 days after Foliage Treatment | | | | | | | | | | | | | | |
|---|---|---|---|---|---|---|---|---|---|---|---|---|---|---|---|---|
| | | 7 days after | | | 14 days after | | | 28 days after | | | 57 days after | | | 126 days after | | |
| | | A | B | C | A | B | C | A | B | C | A | B | C | A | B | C |
| Arsenal isopropylamine salt + SF-1293 mono-sodium salt | 1.5 + 0.25 | 30 | 13 | ⊙ | 43 | 30 | ⊙ | 65 | 42 | ⊙ | 73 | 65 | ○ | 98 | 97 | ○ |
| | 1.5 + 0.375 | 37 | 16 | ⊙ | 53 | 32 | ⊙ | 70 | 44 | ⊙ | 80 | 66 | ⊙ | 98* | 97 | ○ |
| | 1.5 + 0.5 | 40 | 23 | ⊙ | 60 | 38 | ⊙ | 70 | 46 | ⊙ | 83 | 69 | ⊙ | 98* | 97 | ○ |
| | 2.0 + 0.25 | 30 | 13 | ⊙ | 40 | 28 | ⊙ | 60 | 50 | ⊙ | 75 | 70 | ○ | 99 | 99 | |
| | 2.0 + 0.375 | 33 | 16 | ⊙ | 47 | 30 | ⊙ | 57 | 52 | ○ | 72 | 71 | ○ | 96* | 99 | |
| | 2.0 + 0.5 | 33 | 23 | ⊙ | 53 | 36 | ⊙ | 63 | 54 | ○ | 78 | 73 | ○ | 99 | 99 | |
| Arsenal isopropylamine salt | 1.5 | 0 | | | 15 | | | 30 | | | 65 | | | 97 | | |
| | 2.0 | 0 | | | 13 | | | 40 | | | 70 | | | 99 | | |
| SF-1293 mono-sodium salt | 0.25 | 13 | | | 17 | | | 17* | | | 0* | | | 0* | | |
| | 0.375 | 16 | | | 20 | | | 20* | | | 3* | | | 0* | | |
| | 0.5 | 23 | | | 27 | | | 23* | | | 10* | | | 0* | | |
| Hexadinone ** | 8.0 | 17 | | | 33 | | | 78 | | | 79 | | | 76* | | |
| Untreated | | 0 | | | 0 | | | 0 | | | 0 | | | 0 | | |

Notes:- A,B,C and Symbols ○ , ⊙ denote the same meanings as in the Table 2, respectively.
*: denotes a regrowth observed.
**: denotes 1-methyl-1,3,5-triazine-2,4 (1H, 3H)-dione.

Table 6

| Test Compounds | Rate of application of the active compound (kg/ha) | Kill Rate (%) at lapse of 7 to 126 days after Foliage Treatment | | | | | | | | | | | | | | |
|---|---|---|---|---|---|---|---|---|---|---|---|---|---|---|---|---|
| | | 7 days after | | | 14 days after | | | 28 days after | | | 57 days after | | | 126 days after | | |
| | | A | B | C | A | B | C | A | B | C | A | B | C | A | B | C |
| Arsenal isopropylamine salt + SF-1293 mono-sodium salt | 1.5 + 0.25 | 30 | 30 | | 60 | 49 | ⊙ | 90 | 74 | ⊙ | 98 | 97 | ○ | 90* | 86 | ○ |
| | 1.5 + 0.375 | 43 | 30 | ⊙ | 77 | 56 | ⊙ | 93 | 83 | ⊙ | 95 | 97 | | 97* | 86 | ⊙ |
| | 1.5 + 0.5 | 43 | 30 | ⊙ | 87 | 56 | ⊙ | 98 | 76 | ⊙ | 97 | 97 | | 87* | 86 | ○ |
| | 2.0 + 0.25 | 33 | 32 | ○ | 53 | 51 | ○ | 83 | 78 | ○ | 97 | 93 | ○ | 95* | 100 | |
| | 2.0 + 0.375 | 40 | 32 | ○ | 80 | 58 | ⊙ | 97 | 85 | ⊙ | 98 | 94 | ○ | 100 | 100 | |
| | 2.0 + 0.5 | 40 | 32 | ○ | 83 | 58 | ⊙ | 96 | 79 | ⊙ | 96* | 94 | ○ | 87* | 100 | |
| Arsenal isopropylamine salt | 1.5 | 0 | | | 27 | | | 65 | | | 97 | | | 86 | | |
| | 2.0 | 3 | | | 30 | | | 70 | | | 93 | | | 100 | | |
| SF-1293 mono-sodium salt | 0.25 | 30 | | | 30 | | | 27* | | | 7* | | | 0* | | |
| | 0.375 | 30 | | | 40 | | | 50* | | | 13* | | | 0* | | |
| | 0.5 | 30 | | | 40 | | | 30* | | | 15* | | | 0* | | |
| Hexadinone ** (comparative) | 8.0 | 23 | | | 60 | | | 73 | | | 78 | | | 99 | | |
| Untreated | | 0 | | | 0 | | | 0 | | | 0 | | | 0 | | |

Notes:- A,B,C and Symbols ○, ⊙ denote the same meanings as in the Table 2.
*: denotes a regrowth observed.
**: denotes 1-methyl-1,3,5-triazine-2,4 (1H, 3H)-dione.

## Claims

1. A herbicidal composition, characterized in that the composition comprises a mixture of:-
(i) the component (A) which is at least one of the compounds represented by the formula (I) :

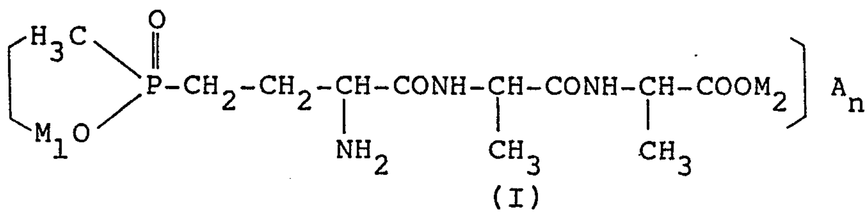

(I)

and the compounds represented by the formula (II) :

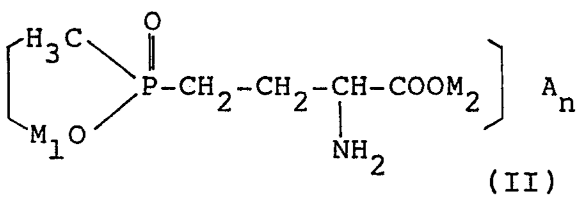

(II)

wherein $M_1$ and $M_2$ are the same or different and are each a hydrogen atom, an alkaline metal cation, an alkaline earth metal cation, zinc cation, nickel cation, manganese cation, ammonium cation or a substituted ammonium cation which is substituted by one, two or three lower alkyl groups, a substituted ammonium cation which is substituted by one, two or three hydroxyalkyl groups, a substituted ammonium cation which is substituted by one, two or three lower alkylene groups, or a choline cation; A is an inorganic acid or an organic acid; and n is 0, 1/2 or 1; and
(ii) the component (B) which is at least one of the compounds represented by the formula:

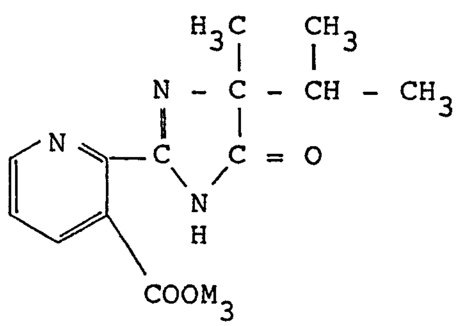

(III)

wherein $M_3$ is a hydrogen atom, an alkaline metal cation, an alkaline earth metal cation, copper cation, zinc cation, nickel cation, manganese cation, ammonium cation, a substituted ammonium cation which is substituted by one, two or three lower alkyl groups, a substituted ammonium cation which is substituted by one, two or three hydroxyalkyl groups, a substituted ammonium cation which is substituted by one, two or three lower alkylene groups, or a choline cation.

2. The composition of claim 1 in which the component (A) is a compound of the formula (I).

3. The composition of claim 1 in which the component (A) is a compound of the formula (II).

4. The composition of claim 1 in which the component (A) is L-enantiomer of a compound of the formula (II).

5. The composition of claim 1 in which the component (B) is a salt of a compound of the formula (III) where $M_3$ is a hydrogen atom,with an alkylamine, preferably isopropylamine.

6. The composition of claim 1 in which the ratio by weight of the component (A) to the component (B) is in a range of 1:0.5 to 1:10.

7. The composition of claim 1 in which the ratio by weight of the component (A) to the component (B) is in a range of 1:1 to 1:5.